# EUROPEAN PATENT SPECIFICATION

(11) **EP 2 016 315 B1**
(45) Date of publication and mention of the grant of the patent: **29.07.2015**
(21) Application number: 06722921.1
(22) Date of filing: 28.04.2006
(51) Int. Cl.: F16J 15/46, B01J 3/03

(54) **INFLATABLE SEAL, SET OF FLANGE PARTS AND CONTAINER COMPRISING SUCH SEAL, AND METHOD OF MANUFACTURING SUCH SEAL**
AUFBLASBARE DICHTUNG, SATZ VON FLANSCHTEILEN UND BEHÄLTER MIT SOLCH EINER DICHTUNG SOWIE VERFAHREN ZUR HERSTELLUNG SOLCH EINER DICHTUNG
JOINT GONFLABLE, JEU DE PIÈCES EN REBORD ET CONTENEUR COMPRENANT UN TEL JOINT ET PROCÉDÉ DE FABRICATION D'UN TEL JOINT

(43) Date of publication of application: 21.01.2009
(73) Proprietor: GEA Pharma Systems AG, 4416 Bubendorf (CH)
(72) Inventor: RÜBNER-PETERSEN, Lars, HANTS SO53 3PB (GB); DONOVAN, John, Peter, Hampshire SO16 9JU (GB)
(74) Representative: Carlsson, Eva
(86) International application number: PCT/DK2006/000229
(87) International publication number: WO 2007/124743

(56) References cited:
- DE-A1- 3 401 955
- DE-A1- 10 027 461
- US-A- 4 189 158
- US-A- 4 227 702
- US-A- 4 758 402
- US-A1- 2005 012 281

## Description

The present invention relates to an inflatable seal according to the preamble of claim 1.

EP 1 286 759 describes an explosion-proof container comprising an upper housing part and a lower housing part. The two housing parts are joined together by coupling elements, which interlockingly engage with one another, and between which an inflatable, hollow seal is arranged in an annular space. The inflatable seal is pressurised pneumatically in order to seal against the internal pressure of the container. However, in order to seal the container sufficiently also during an explosion, a very high pneumatic pressure in the inflatable seal is necessary, which often makes excessive demand on the pneumatic plant used.

DE 1 815 040 discloses the use of an elastic, internal pressure seal to seal between two sealing surfaces. The seal has the form of an inflatable tube that may be provided with a longitudinally extending rib for insertion into a corresponding slot in one of the sealing surfaces in order to guide the inflatable tube.

US patent No. 4,758,402 describes an inflatable seal of the kind mentioned in the introduction.

DE 3401955 describes an inflatable seal according to the preamble of claim 1.

The object of the present invention is to provide an inflatable seal requiring less inflation pressure than the known seals of this type while providing an effective locking.

In view of this object, the blocking element isembedded in the peripheral wall and the inflatable seal is adapted to be explosion-proof at an inflation pressure of no more than approximately 5 barg and with an explosion pressure of up to approximately 10 barg.

Although the elastic material of the peripheral wall of the tubular cross-section, at normal operational pressure of a container sealed by the inflatable seal, will adapt elastically to and seal tightly against the sealing surfaces of two assembled flange parts between which the inflatable seal is arranged, the blocking element having a substantially larger cross-sectional dimension than the remaining part of the peripheral wall can prevent that the seal blows out through a minor gap between the peripheral areas of said sealing surfaces in the case of an explosion in the container. By forming the blocking element from a material that is harder than the material of the remaining part, an even better blocking effect is obtained.

In an embodiment, the blocking element is embedded in the peripheral wall. Thereby, the blocking element is firmly secured in the material of the remaining part of the tubular cross-section. Furthermore, a good sealing effect against the sealing surfaces of the two assembled flange parts is ensured also in the area of the tubular cross-section comprising the blocking element, even if this is made from a harder material than the material of the remaining part of the tubular cross-section, because, in this case, a softer material is surrounding the harder material and thereby seals well against the sealing surfaces.

In an advantageous embodiment in terms of strength and manufacture, the blocking element has the form of a solid ring with a circular cross-section.

In an embodiment, the solid ring is located at the centre of a substantially cylindrical part of the peripheral wall, said cylindrical part forming a corner of the tubular cross-section. The cylindrical form of the corner of the tubular cross-section will facilitate that the corner comprising the solid ring will abut in a corner of a space adapted to house the inflatable seal, so that the position of the solid ring can by controlled. Furthermore, this embodiment is advantageous in terms of strength and manufacture.

In an embodiment, the tubular cross-section, in the at least partly deflated state of the inflatable seal, is composed by four walls, two of which are substantially straight and are connected at a corner, and two of which are curved and are connected at a corner comprising the blocking element. Thereby, the positioning of the corner comprising the blocking element may be controlled during inflation of the inflatable seal, as the curved walls will stretch out during the inflation, thereby displacing the corner in a predetermined direction.

In an embodiment, the exterior faces of the curved walls are concave. Thereby, the positioning of the corner during inflation may be better controlled as a result of a larger displacement of the corner.

In an embodiment, one of the substantially straight walls together with the corners connecting said wall with the adjacent walls form a wedge-shaped key for locking engagement with a corresponding key slot. Thereby, the inflatable seal can be mounted on one of the flange parts comprising such a key slot before the assembling of the flange parts, thereby guiding the seal during assembling.

In an embodiment, the blocking element is made of a different material than the material of the remaining part of the tubular cross-section. Thereby, the hardness of both materials can be chosen fully independently of each other.

In an advantageous embodiment, the blocking element is made of Viton (Registered Trademark) and said material of the remaining part of the tubular cross-section is silicone.

In an embodiment, the blocking element is integrated with and produced in one piece with the remaining part of the tubular cross-section.

In an embodiment, the inflatable seal is adapted to be explosion-proof at an inflation pressure of no more than approximately 5 barg and with an explosion pressure of up to approximately 10 barg, preferably up to approximately 12 barg and most preferred up to approximately 16 barg. An inflation pressure of up to approximately 5 barg is readily available, and the manufacture of the inflatable seal may be more economic, because its peripheral wall, apart from the blocking element, does not have to withstand a high pressure.

According to independent claim 11, the present invention further relates to a set of flange parts comprising an inflatable seal. The inflatable seal is located in an annular space formed by the two flange parts, the annular space, along its periphery, communicates with an annular gap between the two flange parts, the annular gap having a substantially smaller cross-sectional dimension than the annular space, and the area of the tubular cross-section comprising the blocking element is located next to the annular gap. Thereby, in the case of an explosion in the container sealed by the inflatable seal, the area of the tubular cross-section comprising the blocking element may be wedged in the annular gap and thereby ensure that the inflatable seal is not blown out through the annular gap. Consequently, the inflatable seal may seal the flange parts tightly, even in the case of an explosion.

In an embodiment, the set of flange parts comprises a first flange part having a substantially U-shaped cross-section opening radially inward and a second flange part projecting into the U-shaped cross-section of the first flange part, and the annular space formed by the two flange parts is delimited by a slot formed in one of the two flange parts, the slot opening in the axial direction of the flange parts, and by a face of the other one of the two flange parts. In this way, the engaging form of the two flange parts ensure that they will not disengage, even in the case of an explosion. Furthermore, the inflatable seal may adapt to the exact mutual position of the flange parts in the axial direction, so that a mutual displacement of the flange parts is possible without affecting the sealing effect.

In an embodiment, the slot is formed in the second flange part.

In an embodiment, the slot forms a key slot for locking engagement with a corresponding wedge-shaped key formed by the inflatable seal. Thereby, the above-mentioned advantage may be obtained.

In an embodiment, the substantially U-shaped cross-section of the first flange part is composed of a first side wall adapted to be mounted on a first container part, a second side wall having a free end and a bottom wall connecting the first and the second side walls, and the inflatable seal is accommodated between the first side wall of the substantially U-shaped cross-section of the first flange part and the second flange part. Thereby, the annular gap, in which the area of the tubular cross-section comprising the blocking element may be wedged, may extend all the way along the bottom wall of the substantially U-shaped cross-section of the first flange part, so that there is very little risk that the wedged material may escape out through the gap.

In an advantageous embodiment in terms of strength, the second flange part has a substantially U-shaped cross-section forming the slot and being composed of a first side wall adapted to be mounted on a second container part, a second side wall having a free end and a bottom wall connecting the first and the second side walls, and the annular gap between the two flange parts extends at least partly between the free end of the second side wall of the substantially U-shaped cross-section of the second flange part and the first side wall of the substantially U-shaped cross-section of the first flange part.

In an embodiment, the internal distance between the first side wall and the second side wall of the substantially U-shaped cross-section forming the slot is increasing in the outward direction of the slot. Thereby, the inflatable seal can better abut and seal against the side walls of the slot.

In an embodiment, the annular gap between the two flange parts has a cross-sectional dimension that is smaller than 0.5, preferably smaller than 0.4, and more preferred smaller than 0.3 times a cross-sectional dimension of the blocking element of the inflatable seal. Thereby, in the case of an explosion in the container sealed by the inflatable seal, the area of the tubular cross-section comprising the blocking element may be better wedged in the annular gap and thereby ensure that the inflatable seal is not blown out through the annular gap.

In an embodiment, a substantially cylindrical part comprising the blocking element of the inflatable seal and forming a corner of the tubular cross-section of the inflatable seal, in an at least partly deflated state of the inflatable seal, is located substantially at the same distance from the first side wall of the substantially U-shaped cross-section of the first flange part and from the second side wall of the substantially U-shaped cross-section of the second flange part. Thereby, the positioning of the corner comprising the blocking element may be better controlled during inflation of the inflatable seal, so that the corner by displacement in a predetermined direction can reach a position, whereby it abuts said first side wall and said second side wall simultaneously. In this way, a good sealing effect may be ensured.

In an embodiment, in a rest position of the first and the second flange parts, the second flange part is positioned at substantially equal distance from the first and the second side wall of the substantially U-shaped cross-section of the first flange part. Thereby, an adequate clearance is provided, so that the flanges may easily be connected and disconnected by mutual transverse displacement.

According to independent claim 21, the present invention further relates to a container comprising a first and a second container part connected by means of a set of flange parts.

In an embodiment, in a position of the first and the second flange parts following an explosion in the container, the bottom wall of the substantially U-shaped cross-section of the second flange part abuts the second side wall of the substantially U-shaped cross-section of the first flange part, and the blocking element of the inflatable seal is compressed between the second side wall of the substantially U-shaped cross-section of the second flange part and the bottom wall of the substantially U-shaped cross-section of the first flange part.

According to independent claim 23, the present invention further relates to a method of manufacturing an inflatable seal, said method being characterized by that it comprises the following steps:
injection moulding a first ring constituting a part of the peripheral wall of the tubular cross-section of the hollow ring, the first ring comprising an annular recess having a form corresponding to the form of an annular blocking element,
locating the annular blocking element in the annular recess having a form corresponding to the form of the annular blocking element,
bonding a second ring into the first ring along edges of the first ring, so that the second ring together with the first ring constitutes the entire peripheral wall of the tubular cross-section of the hollow ring,
whereby a connection for an inflation medium is fitted into the peripheral wall.

This method of manufacturing is especially suitable for relatively small diameter seals, although it may be employed for all diameters.

In an embodiment, a third ring is injection moulded onto the first ring so that the annular blocking element is fully enclosed by the first ring and the third ring. Thereby, a more robust seal may be obtained.

According to the alternative method of claim 25, said method of manufacturing according to the invention comprises the following steps:
extruding a tube of elastic material having a cross-section with a peripheral wall, the peripheral wall having a channel extending in the longitudinal direction of the tube,
providing a cord-shaped blocking element,
inserting the cord-shaped blocking element into the channel of the peripheral wall,
joining the ends of the cord-shaped blocking element together,
joining the ends of the tube together,
whereby a connection for an inflation medium is fitted into the peripheral wall of the tube.

This alternative method of manufacturing is especially suitable for relatively large diameter seals, although it may be employed for all diameters.

In an embodiment, the ends of the tube are joined together by means of at least an inner joining tool that is placed inside the tube during the joining and that is subsequently removed through a hole in the peripheral wall of the tube, and whereby subsequently to the removal of the inner joining tool the connection for an inflation medium is fitted into the hole in the peripheral wall of the tube. Thereby, a better joining of the ends of the tube may be obtained.

In an embodiment, an outer joining tool is placed outside the tube during the joining, so that the outer joining tool is pressed against the inner joining tool. Thereby, an even better joining of the ends of the tube may be obtained.

According to the alternative method of claim 28, said method of manufacturing according to the invention comprises the following steps:
co-extruding a tube of elastic material with a cord-shaped blocking element, the elastic material having a cross-section with a peripheral wall, and the peripheral wall having a channel extending in the longitudinal direction of the tube,
whereby the cord-shaped blocking element is extruded into the channel of the peripheral wall,
joining the ends of the cord-shaped blocking element together,
joining the ends of the tube together,
whereby a connection for an inflation medium is fitted into the peripheral wall of the tube.

According to independent claim 29, the present invention further relates to a method of inflating an inflatable seal.

The method of inflating an inflatable seal according to the invention is characterized by that the seal is inflated from a rest position, in which two walls of the tubular cross-section of the inflatable seal are curved, to an inflated position, in which said two walls are stretched out and abuts two adjacent flange surfaces, respectively, whereby, during the inflation, at least one substantially straight wall of the tubular cross-section abuts a flange surface, and a corner connecting said two walls and comprising the blocking element is displaced from a position at a distance from the two adjacent flange surfaces to a position abutting the two adjacent flange surfaces at a gap separating the two adjacent flange surfaces. Thereby, the above-mentioned advantages may be obtained.

The invention will now be explained in more detail below by means of examples of embodiments with reference to the very schematic drawing, in which
Figs. 1 to 4 show, at different stages of inflation, respectively, a partial cross-section of an embodiment of an inflatable seal according to the invention, arranged in an annular space between two flange parts,
Fig. 5 shows, in a normal operational position, a side view of a fluid bed dryer comprising flange parts, in which an inflatable seal according to the invention is arranged,
Fig. 5A to 5D show partial cross-sections of the flange parts of the fluid bed dryer in Fig. 5,
Fig. 6 shows the fluid bed dryer in Fig. 5 in a position during an internal explosion,
Fig. 6A to 6D show partial cross-sections of the flange parts of the fluid bed dryer in Fig. 6,
Fig. 7 shows, in a normal operational position, a side view of a mixer comprising flange parts, in which an inflatable seal according to the invention is arranged,
Fig. 7A and 7B show partial cross-sections of the flange parts of the mixer in Fig. 7,
Fig. 8 shows the mixer in Fig. 7 in a position during an internal explosion,
Fig. 8A and 8B show partial cross-sections of the flange parts of the mixer in Fig. 8,
Figs. 9A to 9E show five different parts of an injection mould for the manufacture of an inflatable seal according to the invention,
Fig. 10 shows an injection mould composed of the parts shown in Figs. 9B to 9E,
Fig. 11 shows an extrusion die for the manufacture of an inflatable seal according to the invention,
Fig. 12 shows an inner joining tool for shot moulding of an inflatable seal according to the invention, and
Fig. 13 to 15 show a cross-section of alternative embodiments of an inflatable seal according to the invention.

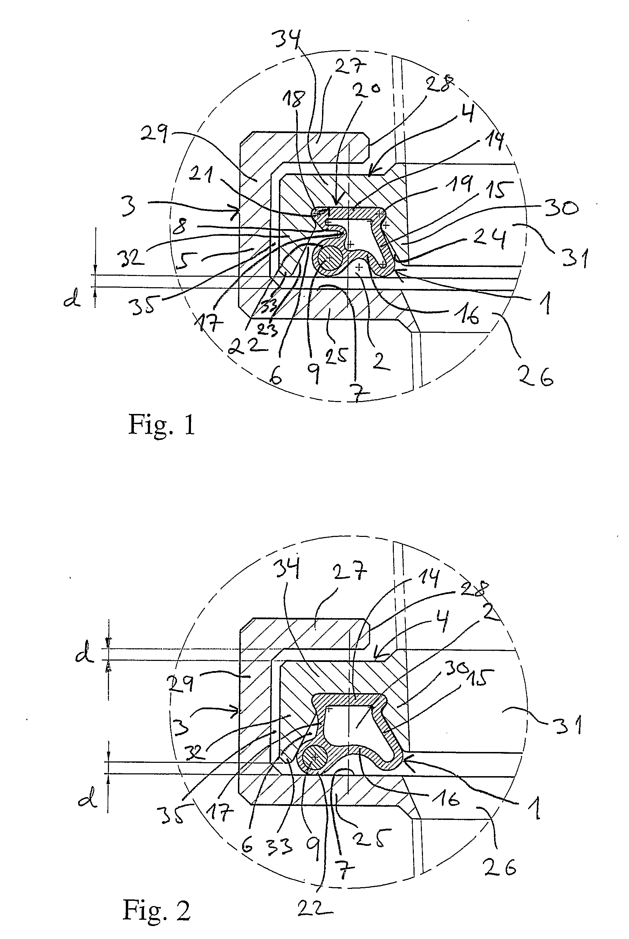

Figs. 1 to 4 show an inflatable seal 1 according to the invention, arranged in an annular space 2 between a first flange part 3 and a second flange part 4. The first flange part 3 has a substantially U-shaped cross-section 5 opening radially inward, and the second flange part 4 projects into the U-shaped cross-section 5 of the first flange part 3. The annular space 2 formed by the two flange parts is delimited by a slot 6 formed in the second flange part 4, the slot 6 opening in the axial direction of the flange parts, and by a face 7 of the first flange part 3.

The substantially U-shaped cross-section of the first flange part 3 is composed of a first side wall 25 mounted on a first container part 26 and forming the face 7, a second side wall 27 having a free end 28 and a bottom wall 29 connecting the first and the second side walls. The second flange part 4 has a substantially U-shaped cross-section forming the slot 6 and being composed of a first side wall 30 mounted on a second container part 31, a second side wall 32 having a free end 33 and a bottom wall 34 connecting the first and the second side walls.

The annular space 2 communicates, along its outer periphery, with an annular gap 35 between the two flange parts 3, 4, the annular gap 35 having a substantially smaller cross-sectional dimension d than the annular space 2. The annular gap 35 between the two flange parts 3, 4 extends from the area between the free end 33 of the second side wall 32 of the substantially U-shaped cross-section of the second flange part 4 and the first side wall 25 of the substantially U-shaped cross-section of the first flange part 3, between the bottom wall 29 of the first flange part 3 and the second side wall 32 of the second flange part 4 and between the second side wall 27 of the first flange part 3 and the bottom wall 34 of the second flange part 4. As it may be seen from Figs. 1 to 3, the cross-sectional dimension d of the annular gap 35 is approximately constant allover. As it will be explained below, the annular gap 35 facilitates the connection between the two flange parts 3, 4 by means of a transverse sliding movement.

The inflatable seal 1 has the form of a hollow ring having a tubular cross-section with a peripheral wall 8, and a blocking element 9 in the form of an O-ring is embedded in the peripheral wall 8 coaxially with the hollow ring, as seen in cross-section in Figs. 1 to 4. The peripheral wall 8 is made of silicone, and the embedded blocking element 9 is made of Viton (Registered Trademark) and is harder than the peripheral wall 8 made of silicone. However, any other materials with suitable features may be employed. The material of the blocking element 9 may have the same hardness as the material of the peripheral wall 8, or it may even be softer. In particular, the blocking element 9 may be an integrated part of the peripheral wall 8, so that no separate O-ring is necessary. Advantageously, the blocking element 9 may have a dark colour, and the peripheral wall 8 may be at least partly translucent, whereby the fact that the inflatable seal 1 is fitted with a blocking element 9 is easily recognizable.

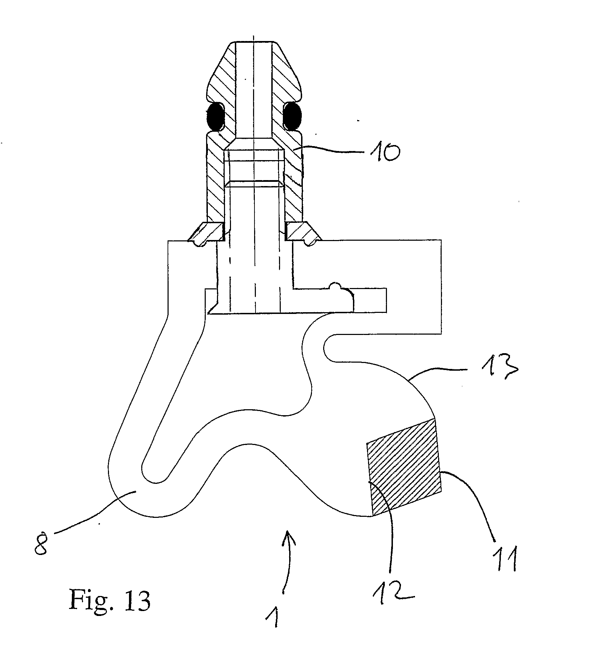

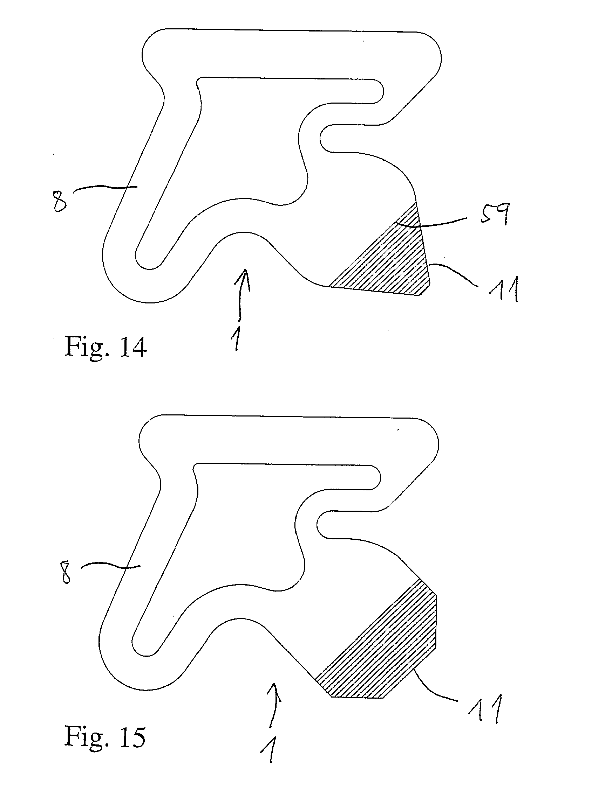

As it may be seen in Fig. 13, the peripheral wall 8 of the tubular cross-section of the inflatable seal 1 is provided with at least one throughgoing connection nozzle 10 for an inflation medium, such as compressed air or other pressurised fluid. Although the inflatable seal 1 in Figs. 1 to 4 is provided with a connection nozzle 10 as shown in Fig. 13, the inflatable seal shown in Fig. 13 is an alternative embodiment to the embodiment shown in Figs. 1 to 4. In the embodiment shown in Fig. 13, a blocking element 9 in the form of a ring 11 having a substantially rhombic cross-section is located in an annular recess 12 in an outer surface 13 of the hollow ring and projects from said outer surface 13. Fig. 14 shows another embodiment corresponding to that of Fig. 13, whereby the ring 11 has a substantially triangular cross-section and is adhered to a flat surface 59 of the peripheral wall 8 of the tubular cross-section of the inflatable seal 1, for instance by gluing or vulcanizing. Fig. 15 shows yet another embodiment corresponding to that of Fig. 13, whereby the ring 11 has a cross-section partly resembling a truncated cone.

Fig. 1 shows the inflatable seal 1 at rest, before inflation, and it is seen that the tubular cross-section is composed of a first straight wall 14, a second straight wall 15, a first curved wall 16 and a second curved wall 17. The first straight wall 14 is, at its corners 18, 19, connected to the second straight wall 15 and the second curved wall 17, respectively. Together with its corners 18, 19, the first straight wall 14 forms a wedge-shaped key 20 in locking engagement with a corresponding key slot 21 formed in the bottom of the slot 6. Alternatively to the locking engagement between the wedge-shaped key 20 and the key slot 21, the first straight wall 14 of the inflatable seal 1 may be fixed in position in the slot 6 formed in the second flange part 4 by means of any suitable means, such as gluing or, for instance, a metal bracket located inside the inflatable seal 1 and having legs protruding out through the wall of the inflatable seal 1 and being fixed in the second flange part 4. The second straight wall 15 connects with the first curved wall 16, which in turn is connected to the second curved wall 17 at a corner 22 having a circular cross-section, and in the centre of which the blocking element 9 is located. The exterior faces of the first curved wall 16 and of the second curved wall 17 have a concave form.

In the rest position shown in Fig. 1, the corner 22 having circular cross-section and comprising the blocking element 9 is located at approximately equal distances from the face 7 of the first flange part 3 and from a first side face 23 of the slot 6, next to the annular gap 35. The second straight wall 15 is located near a second side face 24 of the slot 6.

Fig. 2 shows a semi-inflated position of the inflatable seal 1. It is noted that the corner 22 having circular cross-section and comprising the blocking element 9 abuts the face 7 of the first flange part 3 and the first side face 23 of the slot 6 and is located at the opening of the annular gap 35. The second straight wall 15 abuts the second side face 24 of the slot 6. The first curved wall 16 and the second curved wall 17 still have a concave form.

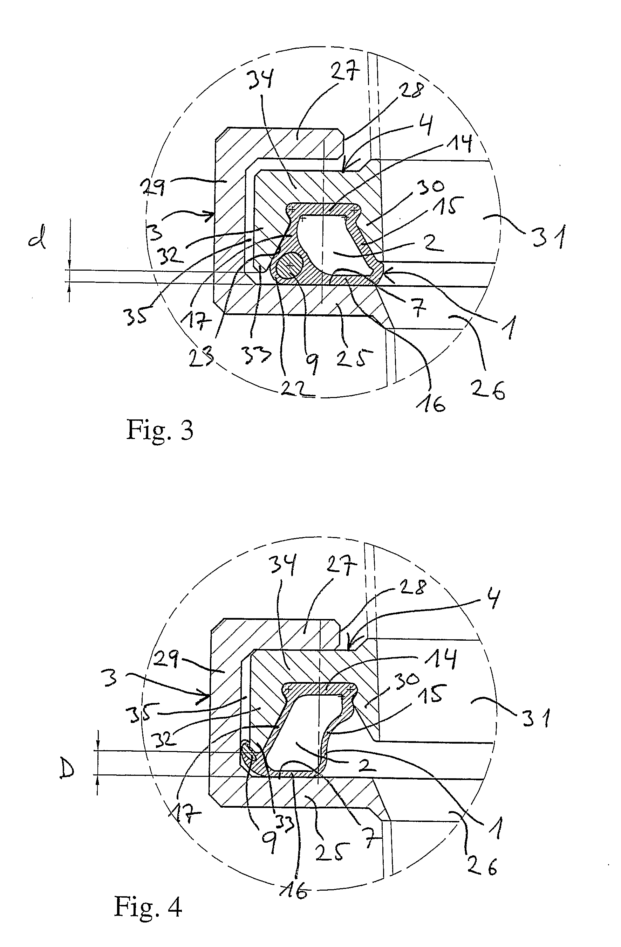

Fig. 3 shows the inflatable seal 1 in a position inflated for processing. The form and position of the first straight wall 14 and the second straight wall 15 corresponds to those of Fig. 2. The first curved wall 16 and the second curved wall 17 of Figs. 1 and 2 have now changed their form into a substantially straight form in Fig. 3, so that the first (formerly) curved wall 16 abuts the face 7 of the first flange part 3, and that the second (formerly) curved wall 17 abuts the first side face 23 of the slot 6. As a result of the deformation of the (formerly) curved walls 16, 17 from the form shown in Fig. 2 to the form shown in Fig. 3, the corner 22 of the tubular cross-section of the inflatable seal 1 is positioned right at the annular gap 35 between the free end 33 of the second side wall 32 of the second flange part 4 and the first side wall 25 of the first flange part 3. Thereby, the corner 22 is in the right position for closing the passage through the gap in the case of an explosion. The correct positioning of the corner 22 is hence a result of the deformation of the walls 16, 17, that is, the stretching out of said walls. However, the walls may be stretched out from other suitable initial forms than those shown in Fig. 1, whereby the walls are curved, for instance they may initially be bent at an acute angle.

Furthermore, it is noted that in Fig. 3, the surface of the inflatable seal 1 facing the inside of the container creates a smooth transition with the internal surface of the container, without any gaps, so that an easily cleanable, continuous surface is obtained inside the container. This is the result of the combination of the design of the inflatable seal 1 and of the correct degree of inflation of the inflatable seal 1 according to the invention.

Fig. 4 shows the inflatable seal 1 in a position during an internal explosion in the container comprising the first and second container parts. As a result of the explosion, the corner 22 of the tubular cross-section of the inflatable seal 1 is deformed and pressed into the annular gap 35 between the two flange parts 3, 4. The formerly second straight wall 15 is now curved. Furthermore, the flange parts 3, 4 have been mutually displaced as a result of the explosion, so that the annular gap 35 between the free end 33 of the second side wall 32 of the second flange part 4 and the first side wall 25 of the first flange part 3 has been increased to a cross-sectional dimension D > d, and so that the second side wall 27 of the first flange part 3 abuts the bottom wall 34 of the second flange part 4.

Because of the larger cross-sectional dimension of the blocking element 9 that is located in the centre of the circular cross-section of the corner 22, the corner 22 is wedged in the gap 35 and thereby closes the passage through the gap, so that explosion gases are not able to escape. This is true, for instance, for an inflation pressure of the inflatable seal 1 of no more than 5 barg and with explosion pressures of 10, 12 and 16 barg. In a conventional inflatable seal without a blocking element in an area of the tubular cross-section, an inflation pressure of the inflatable seal 1 near that of the explosion would be necessary to avoid that explosion gases escape. If the explosion pressure may be, for instance, 16 barg, it is difficult to obtain such a sufficient inflation pressure of approximately 16 barg. If the inflation pressure is smaller, a conventional inflatable seal will be pressed into the gap 35 in an inhomogeneous way, where twists and turns occur, so that the explosive gases will escape.

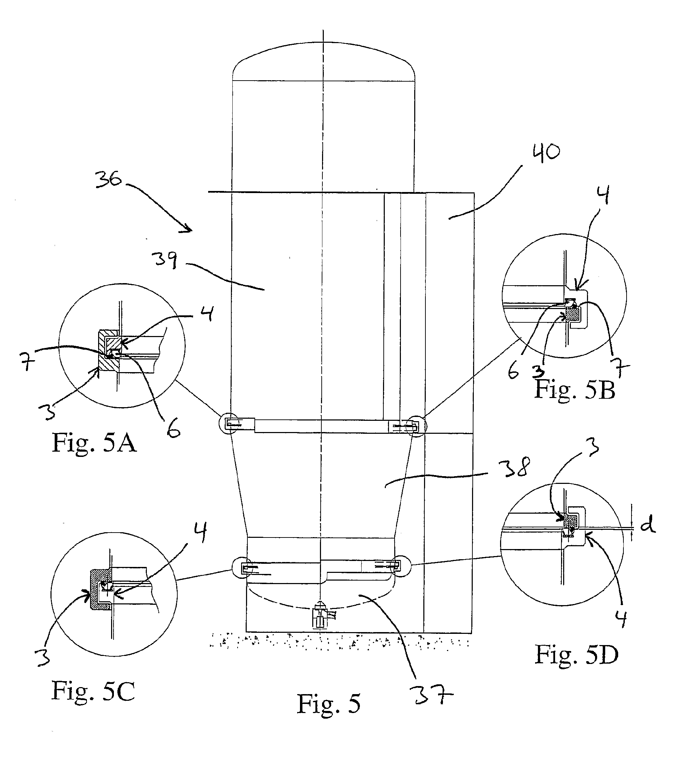

Fig. 5 shows, in a normal operational position, a fluid bed dryer 36 comprising, as known per se, a plenum chamber 37 for the supply of fluidizing gas, a processing chamber 38 and a filter chamber 39. The plenum chamber 37 is connected with the processing chamber 38 by means of interconnected first and second flange parts 3, 4 comprising an inflatable seal 1 as illustrated in the Figs. 1 to 4. The processing chamber 38 is similarly connected with the filter chamber 39.

The plenum chamber 37 is stationarily based on the ground, the filter chamber 39 is rigidly connected with a slightly flexible mast 40 composed by two parallel columns (only the front column is visible in the figure) stationarily based on the ground, and the processing chamber 38 is hinged on one of the columns of the mast 40 by means of a not shown hinge, so that it may be swung sidewise about a vertical axis and thereby removed from its position between the plenum chamber 37 and the filter chamber 39.

Contemplating the connection between the processing chamber 38 and the filter chamber 39, a first flange part 3 is rigidly connected with the processing chamber 38, and a second flange part 4 is rigidly connected with filter chamber 39, see Fig. 5A. Along one half of their circumference, the first and second flange parts 3, 4 correspond to the configuration shown in Figs. 1 to 4 and 5A; however, along the other half of their circumference, the first and second flange parts 3, 4 correspond to the configuration shown in Fig. 5B, whereby the second flange part 4 has a substantially U-shaped cross-section opening radially inward, and the first flange part 3 projects into the U-shaped cross-section of the second flange part 4. The annular space 2 formed by the two flange parts is delimited by the slot 6 that is formed in the second flange part 4, and by the face 7 of the first flange part 3.

In this way, it is possible to connect the first and second flange parts 3, 4 by swinging the processing chamber 38 sidewise about a vertical axis, as explained above. Thereby, the first and second flange parts 3, 4 slide into each other and connect. The above-described annular gap 35 extending between the two flange parts 3, 4 facilitates this sliding connection between the first and second flange parts 3, 4. The connection between the plenum chamber 37 and the processing chamber 38 correspond to the connection between the processing chamber 38 and the filter chamber 39, apart from the fact that the first and second flange parts 3, 4 are reversed about a horizontal plane, see Figs. 5C and 5D.

After the connection between the first and second flange parts 3, 4, the inflatable seals 1 are inflated by means of inflation gas supplied though the connection nozzle 10 as described above, before processing in the fluid bed drier is initiated. It is noted that in the Figs. 5A to 5D, the inflatable seals 1 are shown in a position inflated for processing, corresponding to that of Fig. 3.

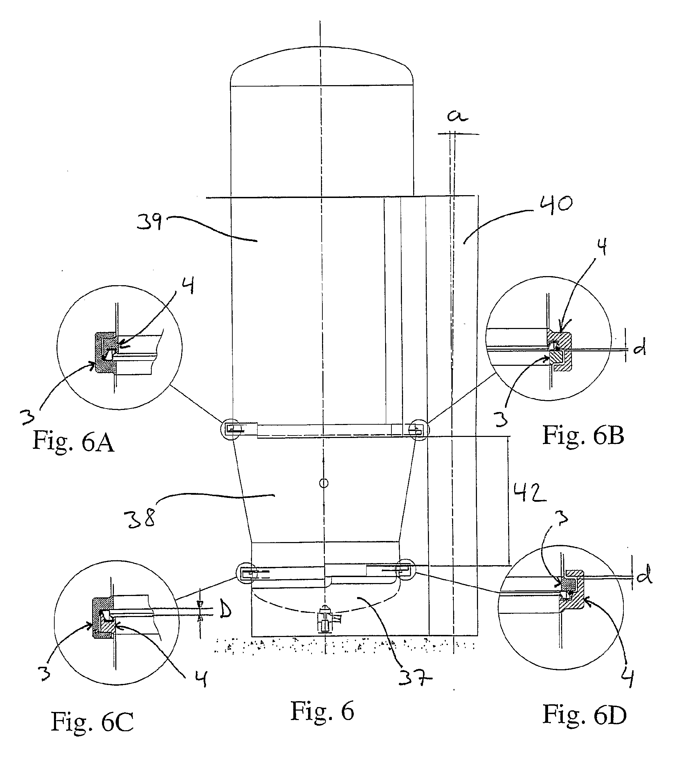

Fig. 6 shows the fluid bed drier in Fig. 5 in a position during an internal explosion in the fluid bed drier. Correspondingly, in Figs. 6A to 6D, the inflatable seal 1 is shown in a position during an internal explosion in the container, corresponding to that of Fig. 4. As a result of the internal explosion pressure, the filter chamber 39 has been tilted and thereby lifted slightly, whereby the mast 40 has been bent by an angle a. The mast 40 has been bent substantially over the length 42 as indicated in Fig. 6. Furthermore, the processing chamber 38 has similarly been tilted and thereby lifted slightly, whereby its not shown hinge has been deformed slightly. As a consequence, at the left hand side of the figure, the flange parts 3, 4 between plenum chamber 37 and the processing chamber 38 and between the processing chamber 38 and the filter chamber 39, respectively, have been mutually displaced, as it is seen in the Figs. 6A and 6C and corresponding to the situation shown in Fig. 4. Because the mast 40 is located at the right hand side of Fig. 6, the flange parts 3, 4 in this side have, as shown in the Figs. 6B and 6D, hardly been displaced mutually during the bending of the mast 40, and therefore, the cross-sectional dimension d of the annular gap 35 is approximately constant allover. After the explosion, the not shown hinge of the processing chamber 38 may be bent back into its initial form or replaced by a new hinge.

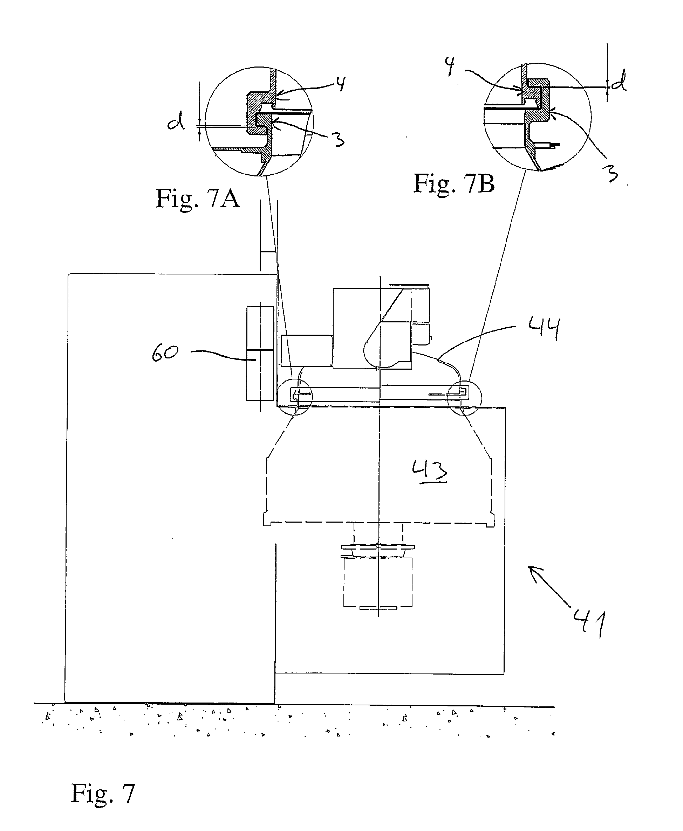

Fig. 7 shows, in a normal operational position, a mixer 41 comprising, as known per se, a product chamber 43 and a safety closure 44. The safety closure 44 is connected with the product chamber 43 by means of interconnected first and second flange parts 3, 4 comprising an inflatable seal 1 as illustrated in the Figs. 1 to 4. However, the inflatable seal 1 is not shown in the figure. Furthermore, the safety closure 44 is connected to the product chamber 43 by means of a linear displacement hinge 60. Similarly to the case above of the fluid bed drier, along one half of their circumference, the first and second flange parts 3, 4 correspond to the configuration shown in Figs. 1 to 4 and 7B; however, along the other half of their circumference, the first and second flange parts 3, 4 correspond to the configuration shown in Fig. 7A. The mutual position of the flange parts 3, 4 shown in Figs. 7A and 7B corresponds to the situation shown in Fig. 3. The weight of the safety closure 44 is thereby outbalanced by the internal pressure of the inflated seal 1.

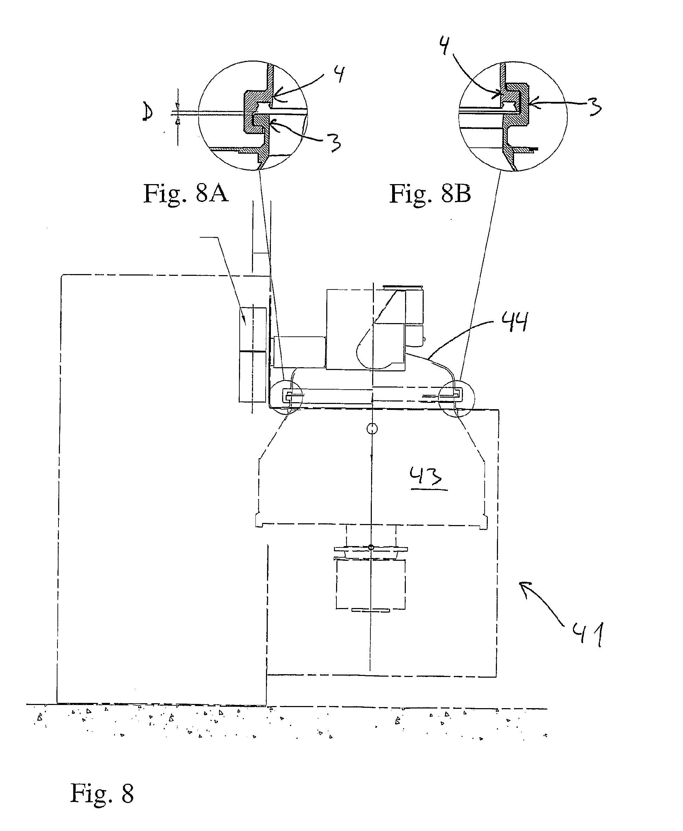

Fig. 8 shows the mixer in Fig. 7 in a position during an internal explosion in the mixer. However, the inflatable seal 1 is not shown in the figure. The mutual position of the flange parts 3, 4 shown in Figs. 8A and 8B corresponds to the situation shown in Fig. 4.

The plenum chamber 37, the processing chamber 38 and the filter chamber 39 of the fluid bed dryer 36 shown in Figs. 5 and 6 may alternatively be connected by a linear displacement hinge as used in the mixer 41 shown in Figs. 7 and 8. Similarly, the product chamber 43 and the safety closure 44 of the mixer 41 may be connected in the same way as the chambers of the fluid bed dryer 36 shown in Figs. 5 and 6.

An inflatable seal 1 according to the invention, arranged in an annular space 2 between a first flange part 3 and a second flange part 4, as shown in Figs. 1 to 4, may also be employed for the connection of pipes, whereby the connected pipes may be fixed in relation to each other by means of fittings, especially in the case that the diameter of the piping is relatively small.

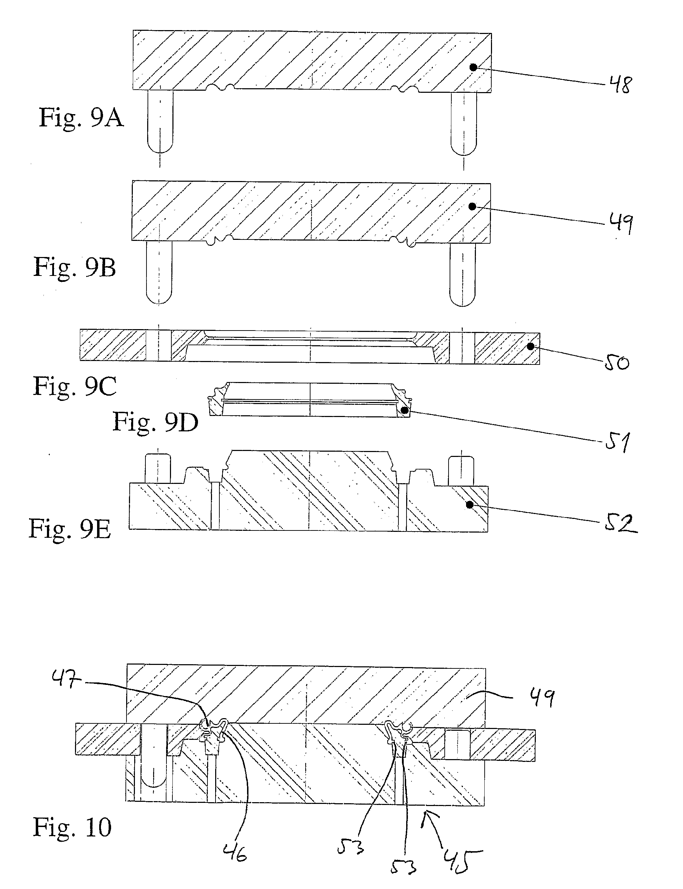

Fig. 10 shows an injection mould 45 composed of the parts 49, 50, 51, 52 shown in Figs. 9B to 9E for injection moulding of a part 46 of an inflatable seal 1 according to the invention. After the part 46 has been injection moulded, a blocking element in the form of an O-ring is inserted in the recess 47 of the part 46, and the part 49 of the injection mould 45 is replaced by the part 48 shown in Fig. 9A, so that the not shown O-ring may me enclosed by further injection moulding. Finally, a not shown bottom ring that is injection moulded separately is bonded to the part 46 at the edges 53 in order to close the tube form of the inflatable seal 1.

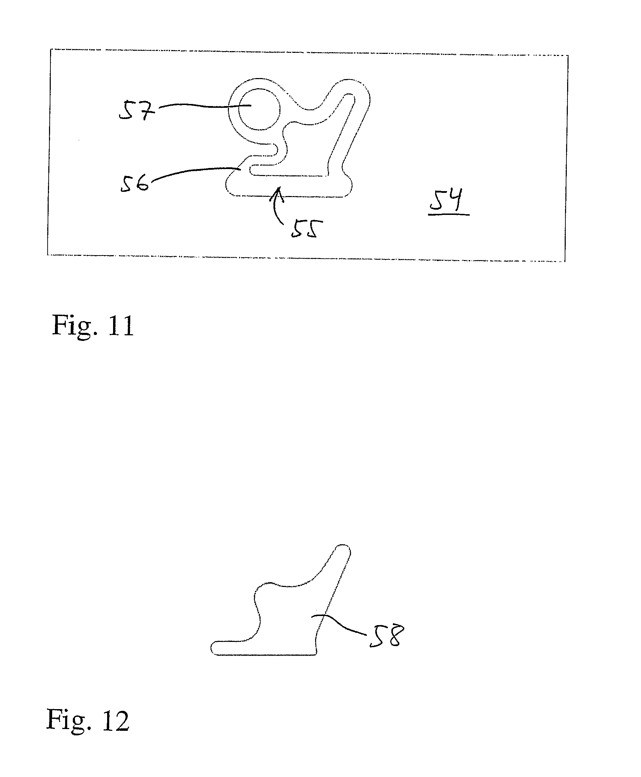

Fig. 11 shows an extrusion die 54 for the extrusion of a tube 55 of elastic material having a cross-section with a peripheral wall 56, the peripheral wall having a channel 57 extending in the longitudinal direction of the tube. After the extrusion, a not shown blocking element 9 in the form of a cord is inserted into the channel of the peripheral wall. Alternatively, the tube 55 may be co-extruded together with the cord-formed blocking element 9, whereby the blocking element 9 may be made of a different material than the tube 55 or may simply be an integrated part of the peripheral wall of said tube having a larger cross-section than the remaining part of the wall.

The ends of the cord are joined together, for instance by welding, and the ends of the tube are joined together by means of an inner joining tool 58 that is shown in Fig. 12 and that is placed inside the tube during the joining and by means of an outer joining tool that is placed outside the tube during the joining, so that the outer joining tool is pressed against the inner joining tool. The outer joining tool that is not shown in the figures is joined by two parts, and the joining of the ends of the extruded tube 55 is performed by shot-moulding silicone into the not shown outer joining tool. The inner joining tool 58 is subsequently removed through a not shown hole in the peripheral wall 56, and a connection nozzle 10 for an inflation medium is mounted in the hole.

Furthermore, the inflatable seal 1 according to the invention may be produced by any other suitable method, for instance fabrication from a cloth material, for instance by room temperature vulcanizing, among others. The materials may include neoprene glued with superglue. For silicone rubber, pressure vulcanizing may be employed.

## Claims

1. An inflatable seal (1) for sealing an annular space (2) between two flange parts (3, 4), the seal being formed by a hollow ring composed of elastic material, the hollow ring having a tubular cross-section with a peripheral wall (8) and being provided with a connection (10) for an inflation medium, the peripheral wall, in at least one area of the tubular cross-section, comprising a blocking element (9) having a substantially larger cross-sectional dimension than the remaining part of the peripheral wall, the blocking element (9) is made from a material that is harder than the material of the remaining part of the tubular cross-section, c h a r a c t e r i z e d in that the blocking element (9) is embedded in the peripheral wall (8) and the inflatable seal (1) is adapted to be explosion-proof at an inflation pressure of no more than approximately 5 barg and with an explosion pressure of up to approximately 10 barg.

2. An inflatable seal according to any one of the preceding claims, wherein the blocking element (9) has the form of a solid ring (11) with a circular cross-section.

3. An inflatable seal according to claim 2, wherein the solid ring (11) is located at the centre of a substantially cylindrical part of the peripheral wall, said cylindrical part forming a corner of the tubular cross-section.

4. An inflatable seal according to any one of the preceding claims, wherein the tubular cross-section, in the at least partly deflated state of the inflatable seal, is composed by four walls, two of which are substantially straight (14, 15) and are connected at a corner, and two of which are curved (16, 17) and are connected at a corner comprising the blocking element.

5. An inflatable seal according to claim 4, wherein the exterior faces of the curved walls (16, 17) are concave.

6. An inflatable seal according to claim 4 or 5, wherein one of the substantially straight walls (14) together with the corners (18, 19) connecting said wall with the adjacent walls form a wedge-shaped key (20) for locking engagement with a corresponding key slot (21).

7. An inflatable seal according to any one of the preceding claims, wherein the blocking element (9) is made of a different material than the material of the remaining part of the tubular cross-section.

8. An inflatable seal according to claim 7, wherein the blocking element is made of Viton and said material of the remaining part of the tubular cross-section is silicone.

9. An inflatable seal according to any one of the preceding claims, wherein the blocking element (9) is integrated with and produced in one piece with the remaining part of the tubular cross-section.

10. An inflatable seal according to any one of the preceding claims, wherein the inflatable seal (1) is adapted to be explosion-proof with an explosion pressure of up to approximately 12 barg and preferably up to approximately 16 barg.

11. A set of flange parts (3, 4) comprising an inflatable seal according to any one of the preceding claims, wherein the inflatable seal (1) is located in an annular space (2) formed by the two flange parts (3, 4), **characterized in that** the annular space, along its periphery, communicates with an annular gap (35) between the two flange parts, the annular gap having a substantially smaller cross-sectional dimension than the annular space, and wherein the area of the tubular cross-section comprising the blocking element is located next to the annular gap.

12. A set of flange parts (3, 4) according to claim 11, comprising a first flange part having a substantially U-shaped cross-section opening radially inward and a second flange part projecting into the U-shaped cross-section of the first flange part, and wherein the annular space (2) formed by the two flange parts is delimited by a slot (6) formed in one of the two flange parts (3, 4), the slot opening in the axial direction of the flange parts, and by a face of the other one of the two flange parts.

13. A set of flange parts (3, 4) according to claim 12, wherein the slot (6) is formed in the second flange part (4).

14. A set of flange parts according to claim 11 or 12, wherein the slot (6) forms a key slot (21) for locking engagement with a corresponding wedge-shaped key (20) formed by the inflatable seal (1).

15. A set of flange parts according to any one of the claims 11 to 14, wherein the substantially U-shaped cross-section of the first flange part (3) is composed of a first side wall (25) adapted to be mounted on a first container part (26), a second side wall (27) having a free end (28) and a bottom wall (29) connecting the first and the second side walls, and wherein the inflatable seal is accommodated between the first side wall of the substantially U-shaped cross-section of the first flange part and the second flange part.

16. A set of flange parts according to claim 15, wherein the second flange part (4) has a substantially U-shaped cross-section forming the slot and being composed of a first side wall (30) adapted to be mounted on a second container part, a second side wall (32) having a free end (33) and a bottom wall (34) connecting the first and the second side walls, and wherein the annular gap (35) between the two flange parts (3, 4) extends at least partly between the free end of the second side wall of the substantially U-shaped cross-section of the second flange part and the first side wall of the substantially U-shaped cross-section of the first flange part.

17. A set of flange parts according to claim 16, wherein the internal distance between the first side wall (25) and the second side wall (27) of the substantially U-shaped cross-section forming the slot is increasing in the outward direction of the slot.

18. A set of flange parts according to any one of the claims 11 to 17, wherein the annular gap (35) between the two flange parts has a cross-sectional dimension that is smaller than 0.5, preferably smaller than 0.4, and more preferred smaller than 0.3 times a cross-sectional dimension of the blocking element of the inflatable seal.

19. A set of flange parts according to any one of the claims 12 to 18, wherein a substantially cylindrical part comprising the blocking element (9) of the inflatable seal (1) and forming a corner of the tubular cross-section of the inflatable seal, in an at least partly deflated state of the inflatable seal, is located substantially at the same distance from the first side wall (25) of the substantially U-shaped cross-section of the first flange part (3) and from the second side wall (32) of the substantially U-shaped cross-section of the second flange part (4).

20. A set of flange parts according to any one of the claims 12 to 19, wherein, in a rest position of the first and the second flange parts (3, 4), the second flange part is positioned at substantially equal distance from the first and the second side wall of the substantially U-shaped cross-section of the first flange part.

21. A container comprising a first and a second container part, **characterized in that** the first and the second container part being connected by means of a set of flange parts according to any one of the claims 11 to 20.

22. A container according to claim 21, wherein, in a position of the first and the second flange parts (3, 4) following an explosion in the container, the bottom wall of the substantially U-shaped cross-section of the second flange part abuts the second side wall of the substantially U-shaped cross-section of the first flange part, and the blocking element (9) of the inflatable seal (1) is compressed between the second side wall (32) of the substantially U-shaped cross-section of the second flange part (4) and the bottom wall of the substantially U-shaped cross-section of the first flange part.

23. A method of manufacturing an inflatable seal according to any one of the claims 1 to 9, **characterized by** that it comprises the following steps:
injection moulding a first ring constituting a part of the peripheral wall of the tubular cross-section of the hollow ring, the first ring comprising an annular recess having a form corresponding to the form of an annular blocking element,
locating the annular blocking element in the annular recess having a form corresponding to the form of the annular blocking element,
bonding a second ring into the first ring along edges of the first ring, so that the second ring together with the first ring constitutes the entire peripheral wall of the tubular cross-section of the hollow ring,
whereby a connection for an inflation medium is fitted into the peripheral wall.

24. The method of claim 23, whereby a third ring is injection moulded onto the first ring so that the annular blocking element is fully enclosed by the first ring and the third ring.

25. A method of manufacturing an inflatable seal according to any one of the claims 1 to 10, **characterized by** that it comprises the following steps:
extruding a tube of elastic material having a cross-section with a peripheral wall, the peripheral wall having a channel extending in the longitudinal direction of the tube,
providing a cord-shaped blocking element,
inserting the cord-shaped blocking element into the channel of the peripheral wall,
joining the ends of the cord-shaped blocking element together,
joining the ends of the tube together,
whereby a connection for an inflation medium is fitted into the peripheral wall of the tube.

26. The method of claim 25, whereby the ends of the tube are joined together by means of at least an inner joining tool that is placed inside the tube during the joining and that is subsequently removed through a hole in the peripheral wall of the tube, and whereby subsequently to the removal of the inner joining tool the connection for an inflation medium is fitted into the hole in the peripheral wall of the tube.

27. The method of claim 26, whereby an outer joining tool is placed outside the tube during the joining, so that the outer joining tool is pressed against the inner joining tool.

28. A method of manufacturing an inflatable seal according to any one of the claims 1 to 10, **characterized by** that it comprises the following steps:
co-extruding a tube of elastic material with a cord-shaped blocking element, the elastic material having a cross-section with a peripheral wall, and the peripheral wall having a channel extending in the longitudinal direction of the tube,
whereby the cord-shaped blocking element is extruded into the channel of the peripheral wall,
joining the ends of the cord-shaped blocking element together,
joining the ends of the tube together,
whereby a connection for an inflation medium is fitted into the peripheral wall of the tube.

29. A method of inflating an inflatable seal according to any one of the claims 1 to 10 for sealing an annular space between two flange parts, **characterized by** that the seal is inflated from a rest position, in which two walls of the tubular cross-section of the inflatable seal are curved, to an inflated position, in which said two walls are stretched out and abuts two adjacent flange surfaces, respectively, whereby, during the inflation, at least one substantially straight wall of the tubular cross-section abuts a flange surface, and a corner connecting said two walls and comprising the blocking element is displaced from a position at a distance from the two adjacent flange surfaces to a position abutting the two adjacent flange surfaces at a gap separating the two adjacent flange surfaces.

## Patentansprüche

1. Aufblasbare Dichtung (1) zum Abdichten eines ringförmigen Raums (2) zwischen zwei Flanschteilen (3, 4), wobei die Dichtung aus einem hohlen Ring ausgebildet ist, der aus elastischem Material gebildet ist, wobei der hohle Ring einen rohrförmigen Querschnitt mit einer Umfangswand (8) aufweist und mit einer Verbindung (10) für ein Aufblasmedium versehen ist, wobei die Umfangswand in mindestens einem Bereich des rohrförmigen Querschnitts ein Sperrelement (9) mit einer im Wesentlichen größeren Querschnittabmessung als der restliche Teil der Umfangswand aufweist, wobei das Sperrelement (9) aus einem Material hergestellt ist, das härter als das Material des restlichen Teils des rohrförmigen Querschnitts ist, **dadurch gekennzeichnet, dass** das Sperrelement (9) in die Umfangswand (8) eingelassen ist und die aufblasbare Dichtung (1) dazu geeignet ist, auf einem Fülldruck von nicht mehr als ungefähr 5 barg und mit einem Explosionsdruck von bis zu ungefähr 10 barg explosionssicher zu sein.

2. Aufblasbare Dichtung nach einem der vorhergehenden Ansprüche, wobei das Sperrelement (9) die Form eines massiven Rings (11) mit kreisförmigem Querschnitt aufweist.

3. Aufblasbare Dichtung nach Anspruch 2, wobei sich der massive Ring (11) in der Mitte eines im Wesentlichen zylindrischen Teils der Umfangswand befindet, wobei das zylindrische Teil eine Ecke des rohrförmigen Querschnitts ausbildet.

4. Aufblasbare Dichtung nach einem der vorhergehenden Ansprüche, wobei der rohrförmige Querschnitt im mindestens teilweise entleerten Zustand der aufblasbaren Dichtung durch vier Wände gebildet ist, von denen zwei im Wesentlichen gerade (14, 15) und an einer Ecke verbunden sind, und von denen zwei gekrümmt (16, 17) und an einer Ecke verbunden sind, die das Sperrelement aufweist.

5. Aufblasbare Dichtung nach Anspruch 4, wobei die Außenflächen der gekrümmten Wände (16, 17) konkav sind.

6. Aufblasbare Dichtung nach einem der Ansprüche 4 oder 5, wobei eine der im Wesentlichen geraden Wände (14) zusammen mit den Ecken (18, 19), die die Wand mit den benachbarten Wänden verbinden, einen Keil (20) zum Sperreingriff mit einer entsprechenden Keilnut (21) ausbildet.

7. Aufblasbare Dichtung nach einem der vorhergehenden Ansprüche, wobei das Sperrelement (9) aus einem anderen Material als das Material des restlichen Teils des rohrförmigen Querschnitts hergestellt ist.

8. Aufblasbare Dichtung nach Anspruch 7, wobei das Sperrelement aus Viton hergestellt ist und der restliche Teil des rohrförmigen Querschnitts Silikon ist.

9. Aufblasbare Dichtung nach einem der vorhergehenden Ansprüche, wobei das Sperrelement (9) in den restlichen Teil des rohrförmigen Querschnitts integriert und einstückig damit erzeugt ist.

10. Aufblasbare Dichtung nach einem der vorhergehenden Ansprüche, wobei die aufblasbare Dichtung (1) dazu geeignet ist, mit einem Explosionsdruck von bis zu ungefähr 12 und vorzugsweise bis zu ungefähr 16 barg explosionssicher zu sein.

11. Satz von Flanschteilen (3, 4), aufweisend eine aufblasbare Dichtung nach einem der vorhergehenden Ansprüche, wobei sich die aufblasbare Dichtung (1) in einem ringförmigen Raum (2) befindet, der durch die zwei Flanschteile (3, 4) ausgebildet ist, **dadurch gekennzeichnet, dass** der ringförmige Raum entlang seines Umfangs mit einem ringförmigen Spalt (35) zwischen den zwei Flanschteilen in Verbindung steht, wobei der ringförmige Spalt eine im Wesentlichen kleinere Querschnittsabmessung als der ringförmige Raum aufweist, und wobei sich der Bereich des rohrförmigen Querschnitts, der das Sperrelement aufweist, neben dem ringförmigen Spalt befindet.

12. Satz von Flanschteilen (3, 4) nach Anspruch 11, aufweisend ein erstes Flanschteil mit einem im Wesentlichen U-förmigen Querschnitt, der sich radial einwärts öffnet, und ein zweites Flanschteil, das in den U-förmigen Querschnitt des ersten Flanschteils vorragt, und wobei der ringförmige Raum (2), der durch die zwei Flanschteile ausgebildet ist, durch einen Schlitz (6), der in einem der zwei Flanschteile (3, 4) ausgebildet ist, wobei der Schlitz sich in der axialen Richtung der Flanschteile öffnet, und durch eine Seitenfläche des anderen der zwei Flanschteile begrenzt ist.

13. Satz von Flanschteilen (3, 4) nach Anspruch 12, wobei der Schlitz (6) im zweiten Flanschteil (4) ausgebildet ist.

14. Satz von Flanschteilen nach einem der Ansprüche 11 oder 12, wobei der Schlitz (6) eine Keilnut (21) zum Sperreingriff mit einem entsprechenden Keil (20) ausbildet, der durch die aufblasbare Dichtung (1) ausgebildet ist.

15. Satz von Flanschteilen nach einem der Ansprüche 11 bis 14, wobei der im Wesentlichen U-förmige Querschnitt des ersten Flanschteils (3) aus einer ersten Seitenwand (25), die dazu geeignet ist, an einem ersten Behälterteil (26) angebracht zu sein, einer zweiten Seitenwand (27) mit einem freien Ende (28) und einer Bodenwand (29) gebildet ist, die die erste und die zweite Seitenwand miteinander verbindet, und wobei die aufblasbare Dichtung zwischen der ersten Seitenwand des im Wesentlichen U-förmigen Querschnitts des ersten Flanschteils und dem zweiten Flanschteil untergebracht ist.

16. Satz von Flanschteilen nach Anspruch 15, wobei das zweite Flanschteil (4) einen im Wesentlichen U-förmigen Querschnitt aufweist, der den Schlitz ausbildet und aus einer ersten Seitenwand (30), die dazu geeignet ist, an einem zweiten Behälterteil angebracht zu sein, einer zweiten Seitenwand (32) mit einem freien Ende (33) und einer Bodenwand (34) gebildet ist, die die erste und die zweite Seitenwand miteinander verbindet, und wobei der ringförmige Spalt (35) zwischen den zwei Flanschteilen (3, 4) mindestens teilweise zwischen dem freien Ende der zweiten Seitenwand des im Wesentlichen U-förmigen Querschnitts des zweiten Flanschteils und der ersten Seitenwand des im Wesentlichen U-förmigen Querschnitts des ersten Flanschteils verläuft.

17. Satz von Flanschteilen nach Anspruch 16, wobei der innere Abstand zwischen der ersten Seitenwand (25) und der zweiten Seitenwand (27) des im Wesentlichen U-förmigen Querschnitts, der den Schlitz ausbildet, in der Richtung nach außen von dem Schlitz zunimmt.

18. Satz von Flanschteilen nach einem der Ansprüche 11 bis 17, wobei der ringförmige Spalt (35) zwischen den zwei Flanschteilen eine Querschnittsabmessung aufweist, die kleiner als das 0,5-Fache, vorzugsweise kleiner als das 0,4-Fache und weiter bevorzugt kleiner als das 0,3-Fache einer Querschnittsabmessung des Sperrelements der aufblasbaren Dichtung ist.

19. Satz von Flanschteilen nach einem der Ansprüche 12 bis 18, wobei sich ein im Wesentlichen zylindrisches Teil, das das Sperrelement (9) der aufblasbaren Dichtung (1) aufweist und eine Ecke des rohrförmigen Querschnitts der aufblasbaren Dichtung ausbildet, in einem mindestens teilweise entleerten Zustand der aufblasbaren Dichtung im Wesentlichen im gleichen Abstand zur ersten Seitenwand (25) des im Wesentlichen U-förmigen Querschnitts des ersten Flanschteils (3) und zur zweiten Seitenwand (32) des im Wesentlichen U-förmigen Querschnitts des zweiten Flanschteils (4) befindet.

20. Satz von Flanschteilen nach einem der Ansprüche 12 bis 19, wobei das zweite Flanschteil in einer Ruheposition des ersten und des zweiten Flanschteils (3, 4) in im Wesentlichen gleichem Abstand zur ersten und zur zweiten Seitenwand des im Wesentlichen U-förmigen Querschnitts des ersten Flanschteils angeordnet ist.

21. Behälter, aufweisend ein erstes und ein zweites Behälterteil, **dadurch gekennzeichnet, dass** das erste und das zweite Behälterteil mithilfe eines Satzes von Flanschteilen gemäß einem der Ansprüche 11 bis 20 verbunden sind.

22. Behälter nach Anspruch 21, wobei in einer Position des ersten und des zweiten Flanschteils (3, 4), die auf eine Explosion im Behälter folgt, die Bodenwand des im Wesentlichen U-förmigen Querschnitts des zweiten Flanschteils an die zweite Seitenwand des im Wesentlichen U-förmigen Querschnitts des ersten Flanschteils angrenzt, und das Sperrelement (9) der aufblasbaren Dichtung (1) zwischen der zweiten Seitenwand (32) des im Wesentlichen U-förmigen Querschnitts des zweiten Flanschteils (4) und der Bodenwand des im Wesentlichen U-förmigen Querschnitts des ersten Flanschteils zusammengedrückt ist.

23. Verfahren zum Herstellen einer aufblasbaren Dichtung nach einem der Ansprüche 1 bis 9, **dadurch gekennzeichnet, dass** es die folgenden Schritte aufweist:
Spritzgießen eines ersten Rings, der ein Teil der Umfangswand des rohrförmigen Querschnitts des hohlen Rings bildet, wobei der erste Ring eine ringförmige Aussparung mit einer Form aufweist, die der Form eines ringförmigen Sperrelements entspricht,
Anordnen des ringförmigen Sperrelements in der Aussparung mit einer Form, die der Form des ringförmigen Sperrelements entspricht,
derartiges Verbinden eines zweiten Rings im ersten Ring entlang Kanten des ersten Rings, dass der zweite Ring zusammen mit dem ersten Ring die gesamte Umfangswand des rohrförmigen Querschnitts des hohlen Rings bildet,
wobei eine Verbindung für ein Aufblasmedium in die Umfangswand gepasst wird.

24. Verfahren nach Anspruch 23, wobei ein dritter Ring derart auf den ersten Ring spritzgegossen wird, dass das ringförmige Sperrelement vollständig durch den ersten Ring und den dritten Ring eingeschlossen ist.

25. Verfahren zum Herstellen einer aufblasbaren Dichtung nach einem der Ansprüche 1 bis 10, **dadurch gekennzeichnet, dass** es die folgenden Schritte aufweist:
Extrudieren eines Rohrs aus elastischem Material mit einem Querschnitt mit einer Umfangswand, wobei die Umfangswand einen Kanal aufweist, der in der Längsrichtung des Rohrs verläuft,
Vorsehen eines schnurförmigen Sperrelements,
Einfügen des schnurförmigen Sperrelements in den Kanal der Umfangswand,
Verbinden der Enden des schnurförmigen Sperrelements miteinander,
Verbinden der Enden des Rohrs miteinander,
wobei eine Verbindung für ein Aufblasmedium in die Umfangswand des Rohrs gepasst wird.

26. Verfahren nach Anspruch 25, wobei die Enden des Rohrs mithilfe von mindestens einem inneren Verbindungswerkzeug miteinander verbunden werden, das während des Verbindens innerhalb des Rohrs angeordnet wird und das anschließend durch ein Loch in der Umfangswand des Rohrs entfernt wird, und wobei anschließend an das Entfernen des inneren Verbindungswerkzeugs die Verbindung für ein Aufblasmedium in das Loch in der Umfangswand des Rohrs gepasst wird.

27. Verfahren nach Anspruch 26, wobei ein äußeres Verbindungswerkzeug während des Verbindens derart außerhalb des Rohrs angeordnet wird, dass das äußere Verbindungswerkzeug an das innere Verbindungswerkzeug gepresst wird.

28. Verfahren zum Herstellen einer aufblasbaren Dichtung nach einem der Ansprüche 1 bis 10, **dadurch gekennzeichnet, dass** es die folgenden Schritte aufweist:
Koextrudieren eines Rohrs aus elastischem Material mit einem schnurförmigen Sperrelement, wobei das elastische Material einen Querschnitt mit einer Umfangswand aufweist und die Umfangswand einen Kanal aufweist, der in der Längsrichtung des Rohrs verläuft,
wobei das schnurförmige Sperrelement in den Kanal der Umfangswand extrudiert wird,
Verbinden der Enden des schnurförmigen Sperrelements miteinander,
Verbinden der Enden des Rohrs miteinander,
wobei eine Verbindung für ein Aufblasmedium in die Umfangswand des Rohrs gepasst wird.

29. Verfahren zum Aufblasen einer aufblasbaren Dichtung nach einem der Ansprüche 1 bis 10 zum Abdichten eines ringförmigen Raums zwischen zwei Flanschteilen, **dadurch gekennzeichnet, dass** die Dichtung aus einer Ruheposition, in der zwei Wände des rohrförmigen Querschnitts der aufblasbaren Dichtung gekrümmt sind, zu einer aufgeblasenen Position aufgeblasen wird, in der die zwei Wände ausgestreckt sind und jeweils an zwei benachbarte Flanschflächen anstoßen, wobei während des Aufblasens mindestens eine im Wesentlichen gerade Wand des rohrförmigen Querschnitts an eine Flanschfläche anstößt, und eine Ecke, die die zwei Wände verbindet und das Sperrelement aufweist, aus einer Position in einem Abstand zu den zwei benachbarten Flanschflächen in eine Position verschoben wird, die an die zwei benachbarten Flanschflächen an einem Spalt anstößt, der die zwei benachbarten Flanschflächen trennt.

## Revendications

1. Joint d'étanchéité gonflable (1) pour assurer l'étanchéité d'un espace annulaire (2) entre deux parties (3, 4) de bride, le joint étant constitué par un anneau creux constitué de matière élastique, l'anneau creux ayant une section transversale tubulaire avec une paroi périphérique (8) et étant pourvu d'un raccord (10) pour un moyen de gonflage, la paroi périphérique comprenant, dans au moins une zone de la section transversale tubulaire, un élément (9) de blocage présentant une aire de section sensiblement plus grande que le reste de la paroi périphérique, dans lequel l'élément (9) de blocage est fait d'une matière qui est plus dure que la matière du reste de la section transversale tubulaire, **caractérisé en ce que** l'élément (9) de blocage est noyé dans la paroi périphérique (8) et le joint d'étanchéité gonflable (1) est apte à être antidéflagrant à une pression de gonflage ne dépassant pas environ 5 barg et a une pression d'explosion pouvant atteindre environ 10 barg.

2. Joint d'étanchéité gonflable selon l'une quelconque des revendications précédentes, dans lequel l'élément (9) de blocage a la forme d'une bague pleine (11) ayant une section transversale circulaire.

3. Joint d'étanchéité gonflable selon la revendication 2, dans lequel la bague pleine (11) est située au centre d'une partie sensiblement cylindrique de la paroi périphérique, ladite partie cylindrique constituant un coin de la section transversale tubulaire.

4. Joint d'étanchéité gonflable selon l'une quelconque des revendications précédentes, dans lequel la section transversale tubulaire, quand le joint gonflable est au moins partiellement dégonflé, se compose de quatre parois, dont deux (14, 15) sont sensiblement rectilignes et se rattachent au niveau d'un coin et dont deux (16, 17) sont courbes et se rattachent au niveau d'un coin comprenant l'élément de blocage.

5. Joint d'étanchéité gonflable selon la revendication 4, dans lequel les faces extérieures des parois courbes (16, 17) sont concaves.

6. Joint d'étanchéité gonflable selon la revendication 4 ou 5, dans lequel l'une (14) des parois sensiblement rectilignes forme avec les coins (18, 19) reliant ladite paroi aux parois adjacentes une clavette (20) en forme de coin pour un enclenchement de verrouillage avec une rainure (21) de clavette correspondante.

7. Joint d'étanchéité gonflable selon l'une quelconque des revendications précédentes, dans lequel l'élément (9) de blocage est fait d'une matière différente de la matière du reste de la section transversale tubulaire.

8. Joint d'étanchéité gonflable selon la revendication 7, dans lequel l'élément de blocage est fait en Viton et ladite matière du reste de la section transversale tubulaire est de la silicone.

9. Joint d'étanchéité gonflable selon l'une quelconque des revendications précédentes, dans lequel l'élément (9) de blocage est intégré au reste de la section transversale tubulaire et produit d'une seule pièce avec lui.

10. Joint d'étanchéité gonflable selon l'une quelconque des revendications précédentes, dans lequel ledit joint d'étanchéité gonflable (1) est apte à être antidéflagrant avec une pression d'explosion pouvant atteindre environ 12 barg et de préférence environ 16 barg.

11. Jeu de parties (3, 4) de bride comprenant un joint d'étanchéité gonflable selon l'une quelconque des revendications précédentes, dans lequel le joint d'étanchéité gonflable (1) est situé dans un espace annulaire (2) formé par les deux parties (3, 4) de la bride, **caractérisé en ce que** l'espace annulaire, le long de sa périphérie, communique avec un interstice annulaire (35) entre les deux parties de bride, l'interstice annulaire ayant une aire de section sensiblement inférieure à celle de l'espace annulaire et dans lequel la zone de la section transversale tubulaire comprenant l'élément de blocage est située à côté de l'interstice annulaire.

12. Jeu de parties (3, 4) de bride selon la revendication 11, comprenant une première partie de bride présentant une section transversale sensiblement en forme d'U s'ouvrant radialement vers l'intérieur et une seconde partie de bride saillant dans la section transversale en U de la première partie de bride et dans lequel l'espace annulaire (2) formé par les deux parties de bride est délimité par une rainure (6) pratiquée dans une des deux parties (3, 4) de bride, la rainure s'ouvrant dans la direction axiale des parties de bride, et par une face de l'autre des deux parties de bride.

13. Jeu de parties (3, 4) de bride selon la revendication 12, dans lequel la rainure (6) est pratiquée dans la seconde partie (4) de la bride.

14. Jeu de parties de bride selon la revendication 11 ou 12, dans lequel la rainure (6) forme une rainure (21) de clavette pour un enclenchement de verrouillage avec une clavette (20) correspondante en forme de coin constituée par le joint d'étanchéité gonflable (1).

15. Jeu de parties de bride selon l'une quelconque des revendications 11 à 14, dans lequel la section transversale sensiblement en forme d'U de la première partie (3) de la bride se compose d'une première paroi latérale (25), apte à être montée sur une première partie (26) de récipient, une deuxième paroi latérale (27) ayant une extrémité libre (28) et une paroi de fond (29) reliant les première et deuxième parois latérales et dans lequel le joint d'étanchéité gonflable se loge entre la première paroi latérale de la section transversale sensiblement en forme d'U de la première partie de la bride et la seconde partie de la bride.

16. Jeu de parties de bride selon la revendication 15, dans lequel la seconde partie (4) de la bride a une section transversale sensiblement en forme d'U constituant la rainure et se composant d'une première paroi latérale (30) apte à être montée sur une seconde partie de récipient, une deuxième paroi latérale (32) ayant une extrémité libre (33) et une paroi de fond (34) reliant les première et deuxième parois latérales et dans lequel l'interstice annulaire (35) entre les deux parties (3, 4) de bride s'étend au moins en partie entre l'extrémité libre de la deuxième paroi latérale de la section transversale sensiblement en forme d'U de la seconde partie de bride et la première paroi latérale de la section transversale sensiblement en forme d'U de la première partie de bride.

17. Jeu de parties de bride selon la revendication 16, dans lequel la distance intérieure entre la première paroi latérale (25) et la deuxième paroi latérale (27) de la section transversale sensiblement en forme d'U constituant la rainure augmente dans la direction vers l'extérieur de la rainure.

18. Jeu de parties de bride selon l'une quelconque des revendications 11 à 17, dans lequel l'interstice annulaire (35) entre les deux parties de la bride a une aire de section qui est inférieure à 0,5 fois l'aire de section de l'élément de blocage du joint d'étanchéité gonflable, de préférence inférieure à 0,4 fois et de manière davantage préférée inférieure à 0,3 fois.

19. Jeu de parties de bride selon l'une quelconque des revendications 12 à 18, dans lequel une partie sensiblement cylindrique comprenant l'élément (9) de blocage du joint d'étanchéité gonflable (1) et constituant un coin de la section transversale tubulaire du joint d'étanchéité gonflable, quand ledit joint d'étanchéité gonflable est dans un état au moins partiellement dégonflé, est situé sensiblement à la même distance de la première paroi latérale (25) de la section transversale sensiblement en forme d'U de la première partie (3) de bride et de la deuxième paroi latérale (32) de la section transversale sensiblement en forme d'U de la seconde partie (4) de bride.

20. Jeu de parties de bride selon l'une quelconque des revendications 12 à 19, dans lequel, quand les première et seconde parties (3, 4) de la bride sont dans une position de repos, la seconde partie de la bride est placée à une distance sensiblement égale de la première et de la deuxième paroi latérale de la section transversale sensiblement en forme d'U de la première partie de la bride.

21. Récipient comprenant une première et une seconde partie de récipient, **caractérisé en ce que** les première et seconde parties du récipient sont reliées au moyen d'un jeu de parties de bride selon l'une quelconque des revendications 11 à 20.

22. Récipient selon revendication 21, dans lequel, quand les première et seconde parties (3, 4) de la bride sont dans une position consécutive à une explosion dans le récipient, la paroi de fond de la section transversale sensiblement en forme d'U de la seconde partie de bride vient en butée contre la deuxième paroi latérale de la section transversale sensiblement en forme d'U de la première partie de bride et l'élément (9) de blocage du joint d'étanchéité gonflable (1) est comprimé entre la deuxième paroi latérale (32) de la section transversale sensiblement en forme d'U de la seconde partie (4) de la bride et la paroi de fond de la section transversale sensiblement en forme d'U de la première partie de la bride.

23. Procédé de fabrication d'un joint d'étanchéité gonflable selon l'une quelconque des revendications 1 à 9, **caractérisé en ce qu'**il comprend les étapes consistant à :
mouler par injection un premier anneau constituant une partie de la paroi périphérique de la section transversale tubulaire de l'anneau creux, ledit premier anneau comprenant un évidement annulaire présentant une forme correspondant à celle d'un élément annulaire de blocage,
mettre en place l'élément annulaire de blocage dans l'évidement annulaire présentant une forme correspondant à celle de l'élément annulaire de blocage,
coller un second anneau dans le premier anneau le long des bords du premier anneau, de sorte que le second anneau constitue avec le premier anneau la totalité de la paroi périphérique de la section transversale tubulaire de l'anneau creux,
suite à quoi un raccord pour un moyen de gonflage est monté dans la paroi périphérique.

24. Procédé selon la revendication 23, suivant lequel un troisième anneau est moulé par injection sur le premier anneau de sorte que l'élément annulaire de blocage est entièrement encloisonné par le premier anneau et le troisième anneau.

25. Procédé de fabrication d'un joint d'étanchéité gonflable selon l'une quelconque des revendications 1 à 10, **caractérisé en ce qu'**il comprend les étapes consistant à :
extruder un tube en matière élastique comportant une section transversale ayant une paroi périphérique, la paroi périphérique comportant un canal s'étendant dans la direction longitudinale du tube,
fournir un élément de blocage en forme de cordon,
introduire l'élément de blocage en forme de cordon dans le canal de la paroi périphérique,
assembler les extrémités de l'élément de blocage en forme de cordon,
assembler les extrémités du tube,
suite à quoi un raccord pour un moyen de gonflage est monté dans la paroi périphérique du tube.

26. Procédé selon la revendication 25, suivant lequel les extrémités du tube sont assemblées au moyen d'au moins un outil interne d'assemblage qui est placé à l'intérieur du tube pendant l'assemblage et qui est ultérieurement retiré par un trou dans la paroi périphérique du tube, moyennant quoi suite au retrait de l'outil interne d'assemblage on monte le raccord pour un moyen de gonflage dans le trou dans la paroi périphérique du tube.

27. Procédé selon la revendication 26, suivant lequel un outil externe d'assemblage est placé à l'extérieur du tube pendant l'assemblage, de façon à ce que l'outil externe d'assemblage soit pressé contre l'outil interne de jonction.

28. Procédé de fabrication d'un joint d'étanchéité gonflable selon l'une quelconque des revendications 1 à 10, **caractérisé en ce qu'**il comprend les étapes consistant à :
co-extruder un tube en matière élastique avec un élément de blocage en forme de cordon, la matière élastique comportant une section transversale ayant une paroi périphérique et la paroi périphérique comportant un canal s'étendant dans la direction longitudinale du tube,
moyennant quoi l'élément de blocage en forme de cordon est extrudé dans le canal de la paroi périphérique,
assembler les extrémités de l'élément de blocage en forme de cordon,
assembler les extrémités du tube,
suite à quoi un raccord pour un moyen de gonflage est monté dans la paroi périphérique du tube.

29. Procédé de gonflage d'un joint d'étanchéité gonflable selon l'une quelconque des revendications 1 à 10 pour assurer l'étanchéité d'un espace annulaire entre deux parties de bride, **caractérisé en ce que** le joint d'étanchéité est gonflé d'une position de repos, dans laquelle deux parois de la section transversale tubulaire du joint d'étanchéité gonflable sont courbes, à une position gonflée, dans laquelle lesdites deux parois sont déployées et viennent en butée respectivement sur deux surfaces adjacentes de bride, moyennant quoi, pendant le gonflage, au moins une paroi sensiblement rectiligne de la section transversale tubulaire vient en butée contre une surface de bride, et un coin rattachant lesdites deux parois et comprenant l'élément de blocage se déplace d'une position à une certaine distance des deux surfaces adjacentes de bride à une position en butée contre les deux surfaces adjacentes de bride au niveau d'un interstice séparant les deux surfaces adjacentes de bride.
